# EUROPEAN PATENT APPLICATION

(11) **EP 3 068 080 A1**
(43) Date of publication of application: **14.09.2016**
(21) Application number: 15305373.1
(22) Date of filing: 12.03.2015
(51) Int. Cl.: H04L 12/58, G06Q 10/10

(54) **Method for managing message to be exchanged between a plurality of client devices, a related system and devices**

(71) Applicant: ALCATEL LUCENT, 92100 Boulogne-Billancourt (FR)
(72) Inventor: Mai, Tiep, Blanchardstown, Dublin 15 (IE); Karnstedt, Marcel, Blanchardstown, Dublin 15 (IE); Ajwani, Deepak, Blanchardstown, Dublin 15 (IE); Sala, Alessandra, Blanchardstown, Dublin 15 (IE)
(74) Representative: ALU Antw Patent Attorneys

(57) **Abstract**

The present invention relates to a method, system and related devices for management of messages exchanged between a plurality of client devices, each client device of said plurality of client devices is coupled over a communications network via a messaging server. The method comprises the steps of decomposing each message of said plurality of messages into at least one message section, extracting meta-information from each said message section by analyzing each said message section and additionally determining at least one group of terms from each said message section by analyzing each said message section, each said group of terms representing a topic of said message section and updating a topic model database with said topic for said at least one group of terms and subsequently classifying each said message section by assigning at least one topic to each said message section, said at least one topic being obtained from a topic model database followed by annotating each message section of said plurality of message sections with said at least one topic assigned and said meta-information extracted from each said message section.

## Description

### FIELD OF THE INVENTION

The present invention in particular relates to the message exchange between client devices and more particularly to the management of the message exchange.

### TECHNICAL BACKGROUND OF THE INVENTION

Currently, messaging systems such as chat systems provide very limited means to organize message exchanges such as chat logs and/or chat sessions. Typically, message exchanges such as chat logs and chat sessions (chats persisting for a long time among the same participants) are catalogued using the timestamp to organize them in a chronological order. Some systems also organize different message exchanges such as chat sessions based on the people involved in the specific message exchange e.g. chat sessions. As current messaging systems, e.g. chat systems, only use these limited approaches to organize chats, people end up searching manually through the chat logs to find information that was discussed in past message exchanges such as chat sessions and often fail to find the relevant information at the right time.

Furthermore, in long message exchanges such as chat sessions the conversation evolves and the participants usually discuss different subjects. To manage such sessions in a way that a participant can remember and retrieve the discussion later, the only option that a user has, in current chat systems, is to manually tag every chat session with the tags of all subjects that were discussed. Since people, often, do not bother to do this, these long sessions end up being saved in the same log file, even if the chat has touched upon different topics. It is to be noted that managing of a message exchange may comprise the archiving, searching retrieving etc of a message exchange.

This problem becomes particularly daunting in an enterprise environment, where employees exchange knowledge, insights and procedures on various issues via internal chat systems. Such a non-semantic structure of storage makes it very difficult to retrieve relevant information efficiently. Typically, users want to query for topics or semantics and organizing the chat sessions by the time and date of the chat session does not help in answering such queries. When a user is not able to retrieve the needed information efficiently, this information risks being lost.

These technical limitations in today's messaging systems such as chat systems can result in significant delays, poor communication and severely reduced efficiency. Furthermore, they can impede the speed of decision making in enterprises. This may even be accompanied by emotional consequences with people feeling embarrassed or annoyed at not being able to remember find back relevant information.

### SUMMARY OF THE INVENTION

An objective of embodiments of the present invention is to provide with a method, a system and related devices for managing messages exchanged between a plurality of client devices of the above known type but wherein the management of messages is performed automatically and in a more efficient manner.

According to an aspect of the invention, there is provided a method for management of messages exchanged between a plurality of client devices, each client device of said plurality of client devices is coupled over a communications network via a messaging server, said method comprising the steps of:
- decomposing each message of said plurality of messages into at least one message section; and
- extracting meta-information from each said message section by analyzing each said message section; and
- determining at least one group of terms from each said message section by analyzing each said message section, each said group of terms representing a topic of said message section and updating a topic model database with said topic for said at least one group of terms; and
- classifying each said message section by assigning at least one topic to each said message section, said at least one topic being obtained from a topic model database; and
- annotating each message section of said plurality of message sections with said at least one topic assigned and said meta-information extracted from each said message section.

Still another embodiment of the present invention relates to a method for management of messages according to claim 1, wherein said method further comprises the step of:
- searching said message section based on said at least one topic assigned and/or said meta-information extracted from each said message section.

Still another embodiment of the present invention relates to a method for management of messages according to claim 1, wherein said method further comprises the step of:
- rebuilding said topic model database if during said step of classifying each said message section appears that said topic model database does not contain an appropriate topic.

Another embodiment of the present invention relates to a method for management of messages according to claim 1, wherein said step of decomposing each message of said plurality of messages into at least one message section is based on an Inter-arrival time between each message of a burst of messages exchanged between at least two client devices.

Still another embodiment of the present invention relates to a system configured to manage messages exchanged between a plurality of client devices, each client device of said plurality of client devices is coupled over a communications network via a messaging server, said system comprising:
- a decomposition means (DM) configured to decompose each message of said plurality of messages into at least one message section; and
- an extraction means (EM) configured to extract meta-information from each said message section by analyzing each said message section; and
- topic determination means (TDM) configured to determine at least one group of terms from each said message section by analyzing each said message section, each said group of terms representing a topic of said message section and updating a topic model database with said at least one determined topic; and
- a classification means (CM) configured to classify each said message section by assigning at least one topic to each said message section, said at least one topic being obtained from a topic model database; and
- an annotation means (AM), configured to annotate each message section of said plurality of message sections with said at least one topic assigned and said meta-information extracted from each said message section.

At least one other embodiment of the present invention relates to a summarization engine (SE) for use in a system according to claims 5, wherein said summarization engine (SE) comprises:
- a decomposition means (DM) configured to decompose each message of said plurality of messages into at least one message section; and
- an extraction means (EM) configured to extract meta-information from each said message section by analyzing each said message section.

At least one further embodiment of the present invention relates to a summarization engine (SE) according to claim 6 wherein said summarization engine (SE) further comprises:
- a topic determination means (TDM) configured to determine at least one group of terms from each said message section by analyzing each said message section, each said group of terms representing a topic of said message section and updating a topic model database (TM) with said at least one determined topic.

At least one other embodiment of the present invention relates to a summarization engine (SE) according to claim 7 wherein said topic determination means (TDM) further is configured to rebuild said topic model database if during said step of classifying each said message section appears that said topic model database does not contain an appropriate topic.

Another embodiment of the present invention relates to a Summarization engine (SE) according to claim 6, wherein said decomposition means (DM) is configured to decompose each message of said plurality of messages into at least one message section based on an inter-arrival time between each message of a burst of messages exchanged between at least two client devices.

Another embodiment of the present invention relates to a classification engine (CE) for use in a system according to claim 5, wherein said Classification engine (CE) comprises:
- a classification means (CM) configured to classify each said message section by assigning at least one topic to each said message section, said at least one topic being obtained from a topic model database.

Still another embodiment of the present invention relates to a search and archiving engine (SAE) for use in a system according to claim 5, wherein said search and archiving engine (SAE) comprises:
- an annotation means (AM), configured to annotate each message section of said plurality of message sections with said at least one topic assigned and said meta-information extracted from each said message section.

Another embodiment of the present invention relates to search and archiving engine (SAE) according to claim 10 wherein said Search and archiving engine (SAE) further comprises:
- a searching means (SM) configured to search a message section based on said at least one of said at least one topic assigned and/or said meta-information extracted from each said message section.

In this way, by first decomposing each message of the plurality of messages into at least one message section where each message section e.g. a chat bursts relates to at least one single and dedicated topic, subsequently extracting meta-information from each said message section by analyzing each said message section and by additionally determining at least one group of terms from each said message section by analyzing each said message section, each said group of terms representing a topic of said message section, updating a topic model database with a topic for said at least one group of terms and subsequently classifying each said message section by assigning at least one topic to each said message section, said at least one topic being obtained from a topic model database and further annotating each message section of the plurality of message sections with at least one topic assigned and said meta-information extracted from each said message section, each of the message sections can be retrieved, organized in a certain manner, presented and visualized in a certain user preferred manner.

The client device is able to, based on the meta-information extracted and topics determined and associated to message sections by means of annotating message sections to retrieve one or more relevant message sections based on the meta-information and topics.

The decomposing of each message of the plurality of messages into at least one message section may be based on an inter-arrival time between each message of a burst of messages exchanged between at least two client devices.

The meta-information may comprise tasks included in a message section, keywords included in such message section, a timestamp, people and or group involved in such message section.

The subsequent extracting of meta-information from each said message section may be performed by means of a supervised learning approach, wherein first meaningful keywords are extracted and key phrases from chat bursts on-the-fly may be extracted, based on text features such as term frequency, inverse document frequency, first occurrence of the phrase in the message section e.g. a chat burst and number of words in the phrase. Sentences of a burst are ranked by a weighted combination of the key phrases and the top one is selected as the key sentence. This is used as one feature for summarizing the chat burst.

Commonly, a task is described by a noun and a verb phrase. User names and aliases can be obtained by examining user profiles and by applying Named Entity Recognition tools to analyze the potential noun phrases in messages. Then, short text snippets may be extracted surrounding these known entities, tokenize them by sentences and identify verb phrases. A supervised classifier is used on each sentence with verb features (whether the verb belongs to a predefined group; the distance from the verb phrase to the potential noun phrase) to identify task sentences.

The determining of the topic of said at least one message section, may be performed by grouping terms included in the message section in a way that each group of terms represents one specific topic. In order to do this, such a topic learning model first performs the steps of:
- identifying terms where a term may be a word as it occurs in some input text, a general term like a concept from an encyclopedia to which some input text refers, or a phrase consisting of several words or terms; and
- defining a similarity function being the relation between the identified different terms; and
- clustering the groups of terms that are indentified to be similar to a certain predefined extent.
Such topic learning model may for example be implemented by means of a Latent Dirichlet Allocation or by means of Google distance & WordNet.

The classification is performed by comparing each term of said message section with a set of terms corresponding to said topic. In case there is sufficient overlap between the terms of the message section with the terms corresponding to said topic it is decided that the topic matches the message section to be classified.

In another embodiment, the searching of a message section is based on the at least one topic assigned and additionally or alternatively based on the meta-information extracted from each said message section.

In still a further embodiment, the content of the topic model database is rebuilt or recalculated if during the step of classifying each said message section appears that said topic model database does not contain an appropriate topic. In case during the step of classification it appears that the topic model database TM does not contain an appropriate topic that corresponds to the terms of a message section, the step of rebuilding or recalculating the content of the topic model database anew by determining the topics for a selection of each message section exchanged between the plurality of client devices. The selection may be any arbitrary selection of all the messages exchanged and stored at the messaging server MS and stored at the message Database MD.

In another embodiment, the decomposing of each message of said plurality of messages into at least one message section is based on an inter-arrival time between each message of a burst of messages exchanged between at least two client devices. The inter-arrival time of messages e.g. the chat messages is monitored and based on the observed past patterns of the user (e.g., what is his average time-lag in replying), the right personalized thresholds (adapting to different user chat patterns) for the decomposition is learned.

Alternatively the step of decomposing each message of said plurality of messages into at least one message section may be based on an approach for static decomposition, such as all messages from the same day are forming one section, or all messages from before noon are one section and all messages after noon are another message section.

A further alternative manner for decomposing such message thread may be done by examining the dissimilarity among consecutive sentences or paragraphs and breaking the thread when there is such a strong dissimilarity gap between two paragraphs. The dissimilarity between two consecutive paragraphs in turn can be calculated based on the overlapping set of terms in two paragraphs. This dissimilarity can also be done by measuring the taxonomy distance among associated knowledge-based concepts of terms of two paragraphs.

The effects and advantages of the apparatus and systems according to embodiments of the present invention are substantially the same, *mutatis mutandis,* as those of the corresponding methods according to embodiments of the present inventions.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. This means that there exists a path between an output of A and an input of B which may be a path including other devices or means.

### BRIEF DESCRIPTION OF THE DRAWINGS

The above and other objects and features of the invention will become more apparent and the invention itself will be best understood by referring to the following description of an embodiment taken in conjunction with the accompanying drawings wherein:
Fig. 1 represents the functional structure of a message exchange system including a message management system; and
Fig.2 represent the functional structure of the message management system; and
Fig.3 represents the functional structure of a summarizing engine forming part of the message management system.

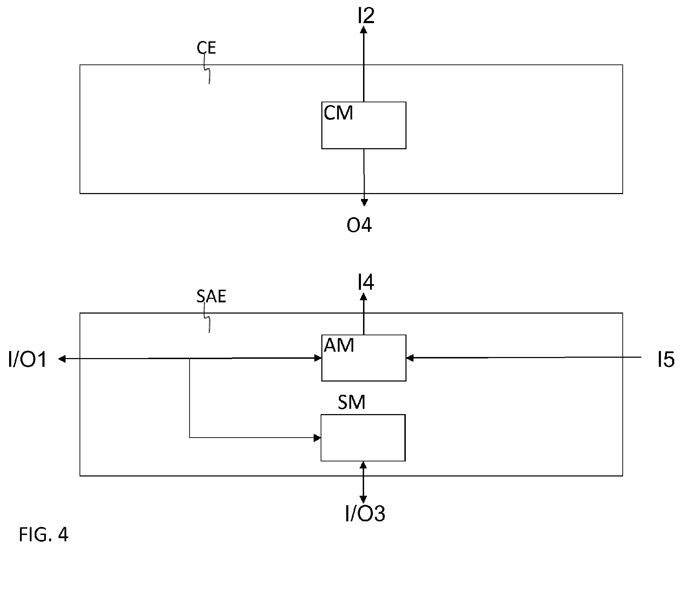

Fig. 4 represents the functional structure of a classifier engine CE and search and archiving engine forming part of the message management system MMS.
Fig. 5 represents an example of message exchange such as chat sessions window - left: view sorted by time, right: extracted topics, keywords & tasks

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

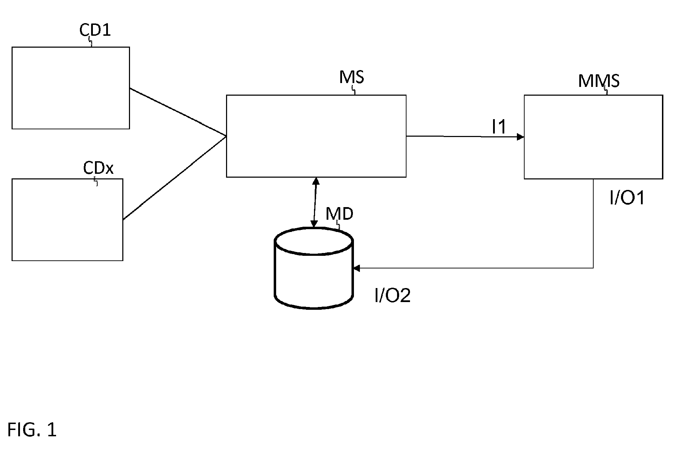

In the following paragraphs, referring to the drawing in FIG.1, an implementation of the message exchange system including a message management system MMS a message server MS and a plurality of client devices is described.

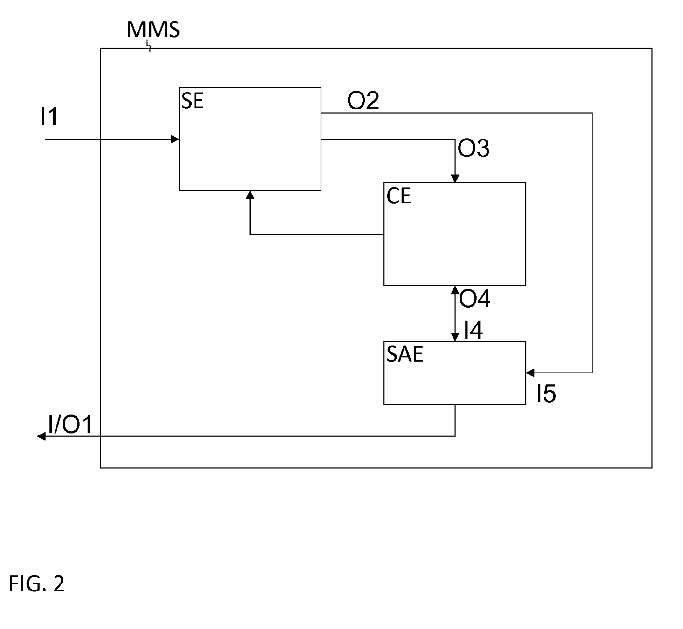

In a further paragraph, all connections between mentioned elements are defined. Subsequently, all relevant functional means of the message management MMS as presented in FIG.2 is described followed by a description of all interconnections of these functional means.

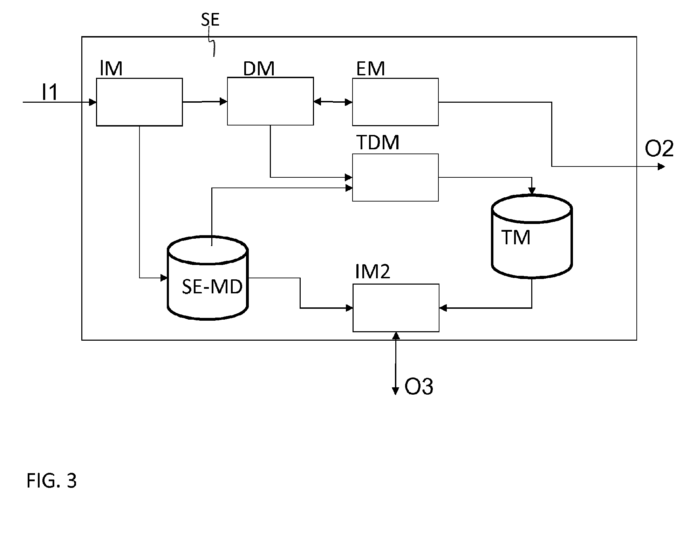

Further, all relevant functional means of the summarization engine as presented in FIG.3 is described followed by a description of all interconnections of these functional means.

In the succeeding paragraph the actual execution of the system is described.

A first essential element of the system configured to manage messages exchanged between a plurality of client devices is a message server MS comprising or be coupled to a message database MD for maintaining message exchanged between a plurality of client devices. Further, there is a plurality of client devices CD1..CDX being client devices such as personal computer, smart-phone, tablet computer or the like that are enabled to run a messaging application like a chat, e-mail system, messages in social media applications such as Facebook messages and/or comments, Google plus, Twitter, blogs discussion forums and Internet relay chats.

Finally there is a message management system according to the present invention that is configured to manage messages exchanged between a plurality of client devices CD1,.., CDx via the messaging server MS.

Each of the client devices CD1,.., CDx may be coupled to the messaging server MS over a suitable communication network optionally containing a concatenation of an access network such as a digital subscriber line access network with coupled DSL modems or a cable network, a mobile communication access network with connected Smartphone or tablet devices or other suitable communications network and core internet network etc.

The messaging server MS further may be coupled over any kind of network to the message management system MMS. Such a message management system MMS may be co-located with the message management system MMS or be located remotely from the message management system MMS.

The message management system MMS is able to access the exchanged message information located at the messaging database MD either directly or via the messaging server MS.

The message management system MMS may first comprise a summarization engine SE for
decomposing each message of said plurality of messages into at least one message section where each message section may relate to at least one topic and extracting meta-information from each said message section by analyzing each said message section and for determining at least one group of terms from each said message section by analyzing each said message section, each said group of terms representing a topic of said message section and updating a topic model database TM with said at least one determined topic.

Further the message management system MMS may comprise a Classification engine CE for classifying each said message section by assigning at least one topic to each said message section, said at least one topic being obtained from a topic model database and additionally the message management system MMS may include a Search and archiving engine SAE for annotating each message section of said plurality of message sections with said at least one topic assigned and said meta-information extracted from each said message section and for searching a message section based on said at least one of said at least one topic assigned and/or said meta-information extracted from each said message section.

The message management system MMS has input-terminal I1 that is at the same time an input-terminal of the summarization engine SE. The summarization engine SE further is coupled with an output 02 to an input 15 of the search and archiving engine. The summarization engine SE further is coupled with an output 03 to an input 12 of the classifying engine CE. The classifying engine CE further is coupled with an output to an input of the summarizing engine SE. The classifying engine CE further is coupled with an output to an input of the search and archiving engine SAE. Finally, the search and archiving engine SAE has an input/output that is at the same time an input/output-terminal I/O1 of the message management system MMS.

Further, the summarization engine SE as presented in FIG.3 comprises an interfacing means IM that is configured to receive all messages exchanged between a plurality of client devices CD1 ..CDX, and a decomposition means DM that is configured to decompose each message of said plurality of messages into at least one message section where each message section e.g. a chat bursts relates to at least one topic and an extraction means EM that is configured to extract meta-information from each said message section by analyzing each said message section and a topic determination means TDM configured to determine at least one group of terms from each said message section by analyzing each said message section, each said group of terms representing a topic of said message section and updating a topic model database TM with said at least one determined topic.

The topic determination means TDM further is configured to rebuild said topic model database if during said step of classifying each said message section appears that said topic mode database does not contain an appropriate topic.

Further the Classification engine CE of the message management system MMS comprises a classification means CM that is configured to classify each said message section by assigning at least one topic to each said message section, said at least one topic being obtained from a topic model database.

The classification means CM is coupled to the topic model database TM and has access to the topics maintained at the topic model database TM via output 03.

Moreover, the Search and archiving engine SAE comprises an annotation means AM that is configured to annotate each message section of the plurality of message sections with said at least one topic assigned and with the meta-information extracted from each said message section.

The search and archiving engine SAE further comprises a searching means SM that is configured to search a message section based on at least one topic assigned and/or said meta-information extracted from each said message section.

The summarization engine SE has an input-terminal I1 that is at the same time an input-terminal of the interfacing means IM that in turn is coupled with an output to an input of the decomposition means DM that in turn is coupled with an output to an input of the extraction means EM. The interfacing means IM additionally is coupled to the database SE-MD. The decomposition means DM further is coupled with an output to an input of the to the topic determination means TDM. The topic determination means TDM is coupled with an input to an output of the database SE-MD. Additionally, the topic determination means TDM is coupled with an output to an input of the topic model database TM.

Furthermore a second interfacing means IM2 has access to the database SE-MD and access to the topic model database TM. The second interfacing means IM2 further has an output that is at the same time an output-terminal of the summarization engine SE.

The extraction means EM is coupled to the topic model database and has an output-terminal that is at the same time an output-terminal of the summarization engine SE.

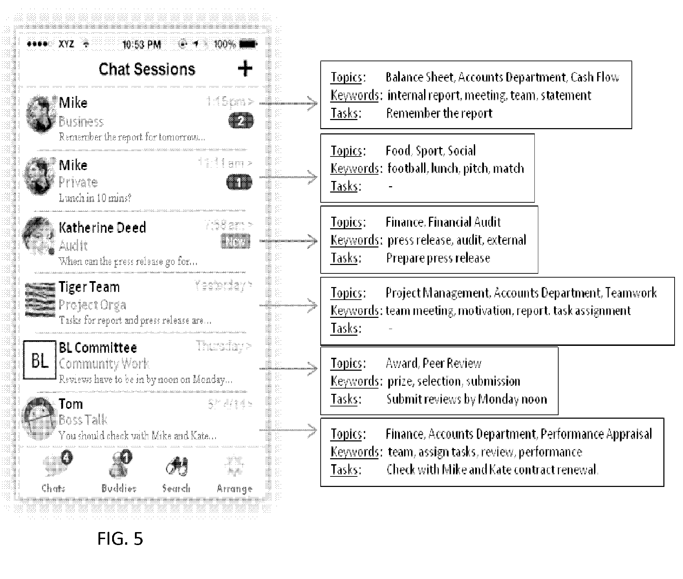

In order to explain the present invention first it is assumed that that a first person Bob is a user of the enterprise chat application supported by his company. Using the application, he has a couple of past and open long-running chat sessions with different groups (identified by a pre-defined name) and individuals. In line with the company policies, this combines business topics involving colleagues, customers and external collaborators as well as a few private topics. For our example, imagine a current list of Bob's chat sessions as shown on the left-hand side of Figure 5. As it is standard in today's chat applications, the different sessions are sorted by the time of the most recent interaction. Optionally, the user might also assign a pre-defined title to each session.

After receipt by the interfacing means IM of the summarization engine of a message received by Bob or sent by Bob, the interfacing means forwards the message to the SE database SE-MD for storage and to the decomposition means DM of the summarization engine that in turn decomposes the received message, or message sent by Bob each message of said plurality of messages into at least one message section where each message section of e.g. a chat bursts relates to at least one topic. The summarization engine decomposes a message such as a chat messages into message sections, e.g. bursts on-the-fly. A message section e.g. a chat burst is identified as a time span in which messages are exchanged in higher frequency than in other time spans. The system studies the inter-arrival time of the chat messages and from the observed past patterns of the user (e.g., what is his average time-lag in replying), it learns the right personalized thresholds (adapting to different user chat patterns) for the decomposition.

The extraction means EM subsequently extracts meta-information from each said message section by analyzing each said message section.

The engine then automatically extracts the keywords and tasks from these chat bursts by means of a supervised learning approach, wherein first meaningful keywords are extracted and key phrases from chat bursts on-the-fly may be extracted, based on text features such as term frequency, inverse document frequency, first occurrence of the phrase in the chat burst and number of words in the phrase. Sentences of a burst are ranked by a weighted combination of the key phrases and the top one is selected as the key sentence. This is used as one feature for summarizing the chat burst.

Commonly, a task is described by a noun and a verb phrase. User names and aliases can be obtained by examining user profiles and by applying Named Entity Recognition tools to analyze the potential noun phrases in chat messages. Then, short text snippets may be extracted surrounding these known entities, tokenize them by sentences and identify verb phrases. A supervised classifier is used on each sentence with verb features (whether the verb belongs to a predefined group; the distance from the verb phrase to the potential noun phrase) to identify task sentences.

The meta-information may comprise tasks included in a message section, keywords included in such message section, a key sentence, a timestamp, people and or group involved in such message section.

The extracted meta-information subsequently is stored in the database SE-MD together with the corresponding message section.

Subsequently or in parallel the topic determination means TDM of the summarization engine SE determines at least one group of terms from each said message section by analyzing each said message section, each said group of terms representing a topic of said message section. The topic model database TM thereafter is updated with said at least one determined topic that corresponds to each respective determined group of terms.

This determining of the topic of said at least one message section, may be performed by grouping terms included in the message section in a way that each group of terms represents one specific topic. In order to do this, such a topic learning model first performs the steps of:
- identifying terms where a term may be a word as it occurs in some input text, a general term like a concept from an encyclopedia to which some input text refers, or a phrase consisting of several words or terms; and
- defining a similarity function being the relation between the identified different terms; and
- clustering the groups of terms based that are indentified to be similar to a certain predefined extent.
Such topic learning model may for example be implemented by means of a Latent Dirichlet Allocation or by means of Google distance & WordNet.

This topic determination model TM of the summarizing engine SE also maintains a learning model that is used by the classifier engine CE to assign topic(s) to the message section e.g. a chat bursts, and as such to the message exchanges such as chat sessions.

Based on each determined message section in combination with the information on all topics determined which are stored in the topic model database TM together with the determined group of terms that correspond to each respective topic, the classification means CM of the Classification engine CE classifies each message section by assigning at least one topic to each said message section, said at least one topic being obtained from a topic model database. The classification means CM classifies the message section by comparing each term of said message section with a group of terms corresponding to the topic as is determined in by the topic determination means TDM and stored in the topic model database TM. In case there is sufficient overlap between the terms of the message section with the terms corresponding to said topic it is decided that the topic matches the message section to be classified. The topic that matches is forwarded to the search and archiving engine for annotating the message section at the message data base MD of the message server MS. The value of correspondence between each term of said message section with a group of terms corresponding to the topic is stored together with the message section and the topic in the topic model database TM for using this value for simple display: this value is shown as a kind of "topic strength" for each topic assigned to the message section and in addition for search of message sections: a message section is only returned for a search for a topic if the correspondence value is above a pre-defined threshold.

However in case the classification means CM of the Classification engine CE is not able to determine a topic that is appropriate for assigning to a message section, in other words the terms of the message section being analyzed to not exceed a certain threshold value of correspondence or match between the terms of the message section with any group of terms where each group of terms corresponds to a topic. Hence no appropriate topic can be assigned to such message section under analysis. In this case the classification means CM of the Classification engine CE sends a trigger signal towards the summarizing engine SE instructing the topic determination means TDM to rebuild the topic model database TM.

The classifier engine CE assigns new incoming message section to the already-identified topics using the topic identification model TM and its parameters such as probability of a word belonging to a topic. There are for instance two identified message sections e.g. chat bursts. One is assigned to an existing topic, the other one cannot be successfully assigned. This indicates that this message section, e.g. chat burst corresponds to a new topic. The novelty of this topic is determined by analyzing the topic probabilities (e.g., if they are all lower than a pre-specified threshold). The similarity of a message section e.g. chat burst to a topic can be derived either from the number of words/n-grams in common or from semantics similarity distances of text phrases such as Explicit Semantic Analysis, Normalized Google Distance. If the new message section e.g. chat burst is very different from all identified topics, the summarization engine is signalled to introduce a new topic and update the topic model database TM.

The topic determination means TDM of the summarization engine updates the parameters of the model with each chat burst. When the classifier engine fails to map the chat burst into any existing topic, the summarization engine automatically introduces a new topic corresponding to that burst in an online fashion. Since the online updates introduce errors in the topic classification model, from time to time (e.g., every midnight), the topic classification model is re-computed in a batch mode that takes a predetermined selection of all observed chat messages into account. This re-computation only alters the model parameters and not the actual topics themselves.

In case during the step of classification it appears that the topic model database TM does not contain an appropriate topic that corresponds to the terms of a message section, the step of rebuilding or recalculating the content of the topic model database anew by determining the topics for a selection of each message section exchanged between the plurality of client devices. The selection may be any arbitrary selection of all the messages exchanged and stored at the messaging server MS and stored at the message Database MD.

However in case at least one topic matches the message section, then the at least one topic that matches is forwarded by the classifications engine CE to the search and archiving engine for annotating the message section at the message database MD of the message server MS the meant at least one topic together with the corresponding message section are received by the annotation means AM of the Search and archiving engine SAE and applied for annotating the message section of said plurality of message sections with said at least one topic assigned to the message section.

Subsequently, or at the same time the meta-information extracted from each said message section is also received or retrieved by the annotation means and additionally or alternatively applied for annotating the same corresponding message section with. The meta information may comprise tasks included in a message section, keywords included in such message section, a key sentence, a timestamp, people and or group involved in such message section. In other words, the message section annotated with at least one topic and alternatively or additionally the described meta-information is stored in the message database MD of the message server.

Furthermore, the searching means SM of the Search and archiving engine SAE may search a particular message section based on the least one topic assigned and/or said meta-information extracted from each said message section. Hence a user, i.e. looking for a message section that is related to certain topic t and additionally remembers that the message were related to a certain group g is able to use topic t and group g as search terms for finding back the meant relevant message section that is annotated with topic t and group g.

Finally, the chat application offers the functionality provided by the search and archiving engine to Bob via corresponding UI features. For instance, Bob can sort and group his chat sessions by topic rather than by recency of interaction. Note that chat sessions can now be listed multiple times, depending on the number of topics they cover. Bob is also able to click on different sessions to learn about other associated data, such as people involved, extracted tasks, etc. The inclusion of the extracted meta-data into the archiving functionality allows that Bob can search all his chat history and browse his chat sessions accordingly. Moreover, when a new user joins an existing chat session (e.g., Bob includes Mike and Kate into an ongoing group chat), all the existing chat messages as well as associated meta-data are immediately available.

The proposed chat analytics and archiving system can be used to organize chat logs and optimize the workflow for workers in call centres. After a chat session with a client, the chat gets automatically classified and analyzed with respect to other chat sessions in the same class to determine whether the used procedure has respected the service requirements, solved the customer needs, etc. These analyzed and archived chats can be re-used to improve the future performance or to evaluate the KPIs of the call centre workers (a very important problem for many call-centres). Call centres are interested in advanced analytics systems to optimize and automate the way they operate. They usually divide the customer problems into predefined categories. As a major improvement, our system can automatically learn the final category/categories of chat session. This provides very relevant statistical summaries to the call-centres, such as number of customers with problem X, efficiency in solving different problems, best practices and better procedure to solve specific customer needs. Finally, corresponding chats can also be used to determine the satisfaction level of the client (his final mood as learned from his chat messages) and this can be sent directly to a central system to improve worker training.

Further, it is to be noted that although the embodiment describes a client-server architecture wherein the present invention is implemented and executed, this also could have been implemented and executed in a peer-to-peer architecture, cloud architecture, hardware architecture, and each other form in between.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for management of messages exchanged between a plurality of client devices, each client device of said plurality of client devices is coupled over a communications network via a messaging server, said method comprising the steps of:
- decomposing each message of said plurality of messages into at least one message section; and
- extracting meta-information from each said message section by analyzing each said message section; and
- determining at least one group of terms from each said message section by analyzing each said message section, each said group of terms representing a topic of said message section and updating a topic model database with said topic for said at least one group of terms; and
- classifying each said message section by assigning at least one topic to each said message section, said at least one topic being obtained from a topic model database; and
- annotating each message section of said plurality of message sections with said at least one topic assigned and said meta-information extracted from each said message section.

2. Method for management of messages according to claim 1, wherein said method further comprises the step of:
- searching said message section based on said at least one topic assigned and/or said meta-information extracted from each said message section.

3. Method for management of messages according to claim 1, wherein said method further comprises the step of:
- rebuilding said topic model database if during said step of classifying each said message section appears that said topic model database does not contain an appropriate topic.

4. Method for management of messages according to claim 1, wherein said step of decomposing each message of said plurality of messages into at least one message section is based on an
Inter-arrival time between each message of a burst of messages exchanged between at least two client devices.

5. System configured to manage messages exchanged between a plurality of client devices, each client device of said plurality of client devices is coupled over a communications network via a messaging server, said system comprising:
- a decomposition means (DM) configured to decompose each message of said plurality of messages into at least one message section; and
- an extraction means (EM) configured to extract meta-information from each said message section by analyzing each said message section; and
- topic determination means (TDM) configured to determine at least one group of terms from each said message section by analyzing each said message section, each said group of terms representing a topic of said message section and updating a topic model database with said at least one determined topic; and
- a classification means (CM) configured to classify each said message section by assigning at least one topic to each said message section, said at least one topic being obtained from a topic model database; and
- an annotation means (AM), configured to annotate each message section of said plurality of message sections with said at least one topic assigned and said meta-information extracted from each said message section.

6. Summarization engine (SE) for use in a system according to claims 5, wherein said summarization engine (SE) comprises:
- a decomposition means (DM) configured to decompose each message of said plurality of messages into at least one message section; and
- an extraction means (EM) configured to extract meta-information from each said message section by analyzing each said message section.

7. Summarization engine (SE) according to claim 6 wherein said summarization engine (SE) further comprises:
- a topic determination means (TDM) configured to determine at least one group of terms from each said message section by analyzing each said message section, each said group of terms representing a topic of said message section and updating a topic model database (TM) with said at least one determined topic.

8. Summarization engine (SE) according to claim 7 wherein said topic determination means (TDM) further is configured to rebuild said topic model database if during said step of classifying each said message section appears that said topic mode database does not contain an appropriate topic.

9. Summarization engine (SE) according to claim 6, wherein said decomposition means (DM) is configured to decompose each message of said plurality of messages into at least one message section based on an inter-arrival time between each message of a burst of messages exchanged between at least two client devices.

10. Classification engine (CE) for use in a system according to claim 5, wherein said Classification engine (CE) comprises:
- a classification means (CM) configured to classify each said message section by assigning at least one topic to each said message section, said at least one topic being obtained from a topic model database.

11. Search and archiving engine (SAE) for use in a system according to claim 5, wherein said search and archiving engine (SAE) comprises:
- an annotation means (AM), configured to annotate each message section of said plurality of message sections with said at least one topic assigned and said meta-information extracted from each said message section.

12. Search and archiving engine (SAE) according to claim 10 wherein said Search and archiving engine (SAE) further comprises:
- a searching means (SM) configured to search a message section based on said at least one of said at least one topic assigned and/or said meta-information extracted from each said message section.
